# EUROPEAN PATENT APPLICATION

(11) **EP 4 840 659 A1**
(43) Date of publication of application: **18.11.2026**
(21) Application number: 25757820.3
(22) Date of filing: 21.02.2025
(51) Int. Cl.: B60J 1/00, F21V 8/00

(54) **VEHICLE, AND GLASS ASSEMBLY AND MANUFACTURING METHOD THEREFOR**

(30) Priority: 22.02.2024 CN 202410198528
(71) Applicant: Fuyao Glass Industry Group Co., Ltd., Fuqing, Fujian 350300 (CN)
(72) Inventor: ZHENG, Zuqing, Fuzhou, Fujian 350300 (CN); SHEN, Junlong, Fuzhou, Fujian 350300 (CN); WANG, Jie, Fuzhou, Fujian 350300 (CN); YE, Zhidong, Fuzhou, Fujian 350300 (CN); YE, Jiarong, Fuzhou, Fujian 350300 (CN); LIN, Shengye, Fuzhou, Fujian 350300 (CN)
(74) Representative: Hoffmann Eitle
(86) International application number: PCT/CN2025/078426
(87) International publication number: WO 2025/176186

(57) **Abstract**

A vehicle, and a glass assembly and a manufacturing method therefor. The glass assembly comprises a glass body (10), a light guide medium (20), and a bonding assembly (30). During assembly, a first bonding member (31) is firstly connected to the periphery of a first surface (21) and a first main face (101), respectively. Since the first bonding member (31) takes the form of an optical solid adhesive, an optical adhesive tape, an optical adhesive bar or an optical adhesive strip, the first bonding member can support the light guide medium (20), such that the light-guiding medium (20) can be preliminarily fixed to the glass body (10), and a spacing is formed between the light guide medium (20) and the glass body (10). Liquid is injected into a spatial region (40) enclosed by means of the first bonding member (31), the first surface (21) and the first main face (101), and is cured to obtain a second bonding member (32).

## Description

### CROSS-REFERENCE TO RELATED APPLICATIONS

The present disclosure claims priority to Chinese Patent Application No. 202410198528.8, filed with the China National Intellectual Property Administration on February 22, 2024, and entitled "VEHICLE, GLASS ASSEMBLY AND MANUFACTURING METHOD THEREFOR", the content of which is hereby incorporated by reference in its entirety.

### TECHNICAL FIELD

The present application relates to the technical field of glass, and in particular, relates to a vehicle, a glass assembly, and a manufacturing method thereof.

### BACKGROUND

With the development of the vehicle industry, more and more vehicles are equipped with interior ambient lamps, which can enhance the level of aesthetic appearance inside the vehicle. Glass assemblies in related art include various configurations such as two-piece and three-piece types. A two-piece type glass assembly typically includes an outer glass sheet, a light-guiding block, an inner glass sheet, a light source, and a light-emitting pattern layer, wherein the light-emitting pattern layer is printed on an outer surface of the inner glass sheet, and the light-guiding block is adhesively fixed to the inner glass sheet by an optical adhesive or an optical adhesive tape. When light from the light source is refracted onto the inner glass sheet through the light-guiding block, the light-emitting pattern layer emits light with controllable color, thereby forming an ambient lamp effect.

However, in related art, in the case of using an optical adhesive to bound the light-guiding block to a surface of the glass using, the optical adhesive has a relatively low viscosity, generally of about 700 mpas to 3000 mpas, and due to the gravity, flowing and spreading phenomena occur especially on curved glass, making it impossible to ensure a preset adhesive thickness. Even if a thixotropic adhesive is used, a uniform thickness cannot be completely ensured, and meanwhile, the use of the thixotropic adhesive around the periphery reduces the light transmission area, resulting in a poor optical effect, and the adhesive overflowing from the edges needs to be cleaned after bonding. In the case of using an optical adhesive tape to connect the light-guiding block to the surface of the glass, usually the optical adhesive tape is first bonded to the light-guiding block and then bonded to the glass, and when the light-guiding block is bonded with the glass, bubbles are easily entrapped on the bonding interface during the bonding process since they both are rigid. In addition, the assembling operation is relatively cumbersome and also relatively inefficient since the assembling operation needs to be carried out in a vacuum environment.

### SUMMARY

According to various embodiments of the present application, the present application provides a vehicle, a glass assembly, and a manufacturing method thereof.

A first aspect of the present invention provides a glass assembly, the glass assembly including:
a glass body provided with a first main surface facing an internal environment;
a light-guiding medium and a bonding assembly, wherein the light-guiding medium is provided with a first surface, the first surface is connected and fixed to the first main surface via the bonding assembly, the bonding assembly includes a first bonding member and a second bonding member, the first bonding member is disposed around a periphery of the first surface and forms a non-closed annular structure, and the second bonding member is filled in a spatial region defined and enclosed by the first bonding member, the first surfacem and the first main surface and is obtained by curing a curable liquid.

In an embodiment, the glass assembly further includes a light-emitting light source, the light-emitting light source is disposed on the first main surface and located at an end of the light-guiding medium, light from the light-emitting light source enters the light-guiding medium, and the light-guiding medium is configured to introduce the light from the light-emitting light source into the glass body.

In an embodiment, the first bonding member is configured as a transparent double-sided optical adhesive tape.

In an embodiment, the double-sided optical adhesive tape has a width W1, and 2 mm≤W1≤20 mm.

In an embodiment, the double-sided optical adhesive tape has a thickness d1, and 0.5 mm ≤d1≤5 mm.

In an embodiment, the second bonding member has a refractive index of 1.45 to 1.65.

In an embodiment, the second bonding member has a visible light transmittance ≥ 90%.

In an embodiment, the second bonding member has a haze ≤ 5%.

In an embodiment, the non-closed annular structure includes a first blocking portion, a second blocking portion, and a third blocking portion connected in sequence, and the first blocking portion and the third blocking portion are spaced apart from each other to form an injection port.

In an embodiment, the glass assembly further includes a protective member, and the protective member is disposed circumferentially around the bonding assembly and avoids a position opposite to the light-emitting light source.

In an embodiment, the protective member covers only an outer edge contour of the second bonding member in a circumferential direction thereof; or
the protective member covers an outer contour of the second bonding member in a circumferential direction thereof and at least partially covers a contour of the first bonding member in a circumferential direction thereof.

In an embodiment, the protective member is further connected to the light-guiding medium, and is disposed circumferentially around the light-guiding medium and avoids a position opposite to the light-emitting light source.

In an embodiment, the glass body is configured as a single glass sheet; or
the glass body includes an inner glass sheet, an intermediate layer, and an outer glass sheet which are connected in sequence.

In an embodiment, the glass assembly further includes a light-emitting pattern layer, and the light-emitting pattern layer is disposed on a surface and/or inside of the glass body.

In an embodiment, the second bonding member is an optically clear adhesive, a liquid optical clear adhesive, or an optical clear resin.

A second aspect of the present invention provides a vehicle including the glass assembly as described above.

A third aspect of the present invention provides a method for manufacturing a glass assembly including:
step S100: first connecting a first bonding member respectively to a first main surface of a glass body and a first surface of a light-guiding medium, so that the first bonding member is disposed around a periphery of the first surface and forms a non-closed annular structure; and
step S200: injecting a curable liquid into and filling up a spatial region defined and enclosed by the first bonding member, the first surface, and the first main surface, and curing the liquid to obtain a second bonding member.

In an embodiment, the method further includes: step S300: after the step of curing the liquid to obtain the second bonding member, providing a protective member on an exposed wall surface of the second bonding member; or
providing a protective member on both an exposed wall surface of the first bonding member and an exposed wall surface of the second bonding member.

In an embodiment, in step S200, an adhesive nozzle is configured to extend into the spatial region through an injection port of the non-closed annular structure, and the adhesive nozzle is moved from a side of the injection port to the other side of the injection port in a width direction of the injection port during the adhesive injection process.

In an embodiment, the adhesive nozzle is configured to be in a flat shape; and/or
a spacing S between two opposite side walls of a discharge passage of the adhesive nozzle gradually increases in a discharge direction.

Details of one or more embodiments of the present application are set forth in the following drawings and description. Other features, objectives and advantages of the present application will become apparent from the description, the drawings and the claims.

### BRIEF DESCRIPTION OF THE DRAWINGS

FIG. 1 is a structural schematic view of a glass assembly according to an embodiment of the present application.
FIG. 2 is a top structural schematic view of the structure shown in FIG. 1.
FIG. 3 is a structural schematic view of a glass assembly according to another embodiment of the present application.
FIG. 4 is a structural schematic view of a glass assembly according to yet another embodiment of the present application.
FIG. 5 is a schematic view showing a state during an assembling process of a glass assembly according to an embodiment of the present application.
FIG. 6 is a top structural schematic view of the structure shown in FIG. 5.
10: glass body; 101: first main surface; 102: second main surface; 11: inner glass sheet; 12: intermediate layer; 13: outer glass sheet; 20: light-guiding medium; 21: first surface; 22: second surface; 30: bonding assembly; 31: first bonding member; 311: first blocking portion; 312: second blocking portion; 313: third blocking portion; 32: second bonding member; 33: injection port; 40: spatial region; 50: protective member; 60: light-emitting light source; 70: adhesive nozzle.

### DETAILED DESCRIPTION

In order to make the above objectives, features and advantages of the present application more apparent and comprehensible, the specific embodiments of the present application will be described in detail below with reference to the accompanying drawings. In the following description, many specific details are set forth in order to facilitate a thorough understanding of the present application. However, the present application can be implemented in many other ways different from those described herein, and those skilled in the art can make similar improvements without departing from the concept of the present application. Therefore, the present application is not limited by the specific embodiments disclosed below.

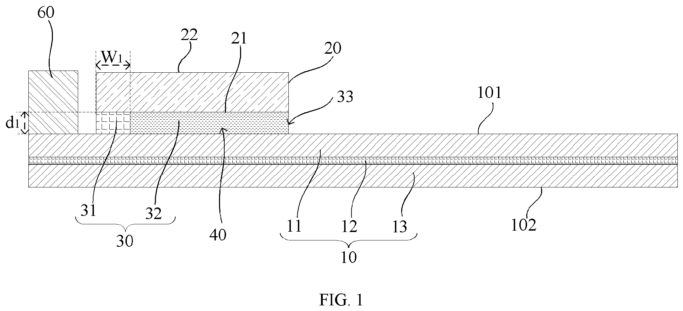

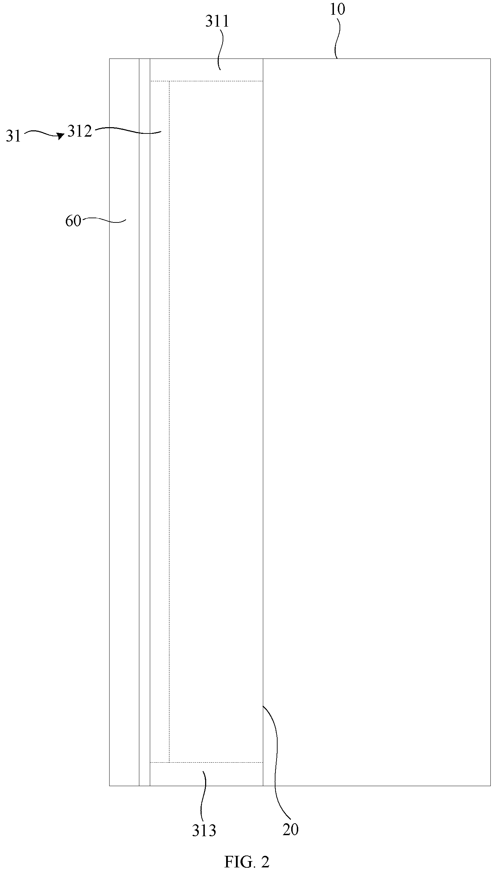

Referring to FIG. 1 and FIG. 2, FIG. 1 shows a structural schematic view of a glass assembly according to an embodiment of the present application. FIG. 2 shows a top structural schematic view of the structure shown in FIG. 1. A glass assembly provided in an embodiment of the present application includes: a glass body 10, a light-guiding medium 20, and a bonding assembly 30. The glass body 10 is provided with a first main surface 101 facing an internal environment. Specifically, the glass body 10 is further provided with a second main surface 102 facing an external environment. That is, the first main surface 101 and the second main surface 102 are respectively provided, for example, on two opposite sides of the glass body 10.

It should be noted that the glass assembly includes but is not limited to being disposed on a vehicle, in a building environment or on other main structures. This can be flexibly adjusted and arranged according to actual requirements, which is not limited herein. When the glass body 10 is specifically, for example, a vehicle window glass, the internal environment corresponds to an indoor environment of the vehicle, and the external environment corresponds to an outdoor environment of the vehicle.

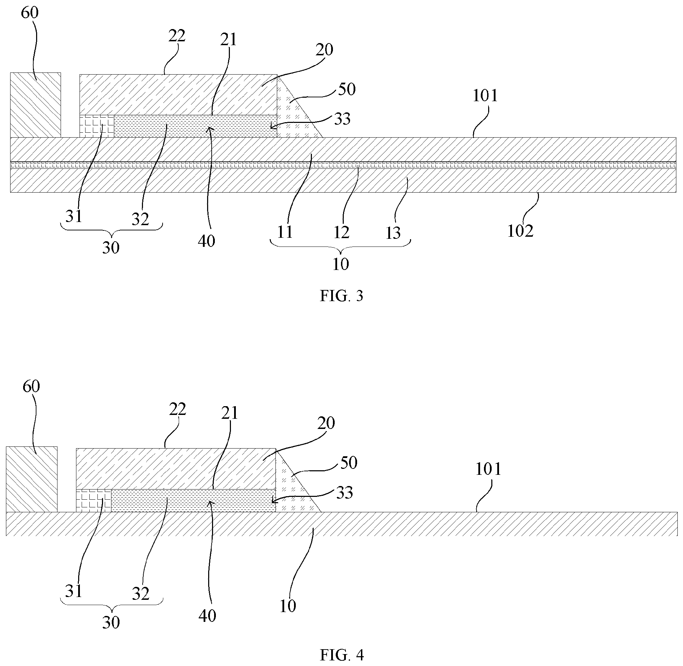

Referring to FIG. 1, FIG. 3 and FIG. 4, FIG. 3 and FIG. 4 show structural schematic views of a glass assembly according to two other embodiments of the present application. In some embodiments, the glass body 10 is configured as a single-layer glass (as shown in FIG. 4) or a laminated glass (as shown in FIG. 1 or FIG. 3), etc., including but not limited thereto. This can be flexibly adjusted and arranged according to actual requirements. In the present embodiment, referring to FIG. 1 and FIG. 3, when the glass body 10 is configured as a laminated glass, the glass body 10 includes an inner glass sheet 11, an intermediate layer 12, and an outer glass sheet 13 which are connected in sequence. Optionally, the intermediate layer 12 includes, but is not limited to, a PVB material, an EVA material, a TPU material, or an SGP material, which enables the inner glass sheet 11 and the outer glass sheet 13 to be connected and fixed to each other.

Furthermore, the light-guiding medium 20 is provided with a first surface 21, the first surface 21 is connected and fixed to the first main surface 101 via the bonding assembly 30. The bonding assembly 30 includes a first bonding member 31 and a second bonding member 32. The first bonding member 31 is disposed around a periphery of the first surface 21 and forms a non-closed annular structure, and the second bonding member 32 is filled in a spatial region 40 defined and enclosed by the first bonding member 31, the first surface 21, and the first main surface 101 and is obtained by curing a curable liquid.

Referring again to FIG. 1, FIG. 3 and FIG. 4, the glass assembly further includes a light-emitting light source 60. The light-emitting light source 60 is disposed on the first main surface 101 and located at an end of the light-guiding medium 20. Light from the light-emitting light source 60 enters the light-guiding medium 20, and the light-guiding medium 20 is configured to introduce the light from the light-emitting light source 60 into the glass body 10.

It should be noted that the light-guiding medium 20 includes, but is not limited to, a straight strip, an arc-shaped strip, or a plate member having a section along a length direction that is triangular, rectangular, trapezoidal, pentagonal, or other regular shapes and other irregular shapes, which can be flexibly adjusted and arranged according to actual requirements, and is not limited herein.

In the present embodiment, an elongated plate having a rectangular section of the light-guiding medium 20 is taken as an example for illustration, but the present application is not limited thereto. The light-guiding medium 20 further includes a second surface 22 arranged opposite to the first surface 21. The second surface 22 includes but is not limited to being arranged parallel to the first surface 21. In the case where the first surface 21 and the second surface 22 are arranged in parallel to each other, when the light from the light-emitting light source 60 enters the light-guiding medium 20, the light-guiding medium 20 can guide the light from the light-emitting light source 60 into the glass body 10, so that the light propagates in the glass body 10. The propagating light encounters a pre-fabricated light-emitting pattern layer to generate reflection, causing the light-emitting pattern layer to emit light, thereby realizing an illumination or atmosphere effect with relatively high incidence efficiency. In addition, compared to a wedge shape, an arc shape, or other irregular shapes, the shape of the light-guiding medium 20 is more regular, thereby reducing processing difficulty and improving production efficiency.

The first bonding member 31 includes an optical solid adhesive, an optical adhesive tape, an optical adhesive rod, an optical adhesive strip, or any combinations thereof.

During the assembling process of the above glass assembly, the first bonding member 31 is first connected to the periphery of the first surface 21 and the first main surface 101, respectively. Since the first bonding member 31 is an optical solid adhesive, an optical adhesive tape, an optical adhesive rod, or an optical adhesive strip, it plays a supporting role for the light-guiding medium 20, enabling the light-guiding medium 20 to be preliminarily fixed onto the glass body 10 and froming a spacing between the light-guiding medium 20 and the glass body 10. The liquid is then injected into the spatial region 40 defined and enclosed by the first bonding member 31, the first surface 21, and the first main surface 101, and is cured to obtain the second bonding member 32. In this way, the thickness of the second bonding member 32 depends on the thickness of the first bonding member 31. Since the thickness of the first bonding member 31 can be relatively well controlled, the thickness of the second bonding member 32 can be easily controlled, thereby improving the accuracy and uniformity of the adhesive thickness. In addition, adhesive overflow can be greatly reduced, thus reducing cleaning operations, and thereby improving product quality and assembling efficiency.

Referring to FIG. 1 and FIG. 2, in an embodiment, the optical adhesive tape is configured as a transparent double-sided optical adhesive tape. Compared with the opaque double-sided adhesive tape in related art, the double-sided optical adhesive tape which is a transparent adhesive tape contributes to increasing an optical path, and thus enhancing the effect of the ambient lamp. In addition, two opposite side surfaces of the double-sided optical adhesive tape are respectively bonded and connected to the first surface 21 and the first main surface 101, which allows the light-guiding medium 20 to be fixed onto the glass body 10 stablely, and provides better stability in assembly compared with using an optical fixing adhesive, an optical adhesive rod, or an optical adhesive strip.

Referring to FIG. 1 and FIG. 2, in addition, a thickness d1 of the double-sided optical adhesive tape determines a distance between the first surface 21 and the first main surface 101, thereby determining a thickness of the bonding assembly 30. That is, the adhesive thickness adhesive can be accurately controlled and adjusted. The specific value of the thickness d1 of the double-sided optical adhesive tape can be flexibly adjusted and controlled according to actual requirements of the adhesive thickness, which is not limited herein.

Referring to FIG. 1 and FIG. 2, in an embodiment, the double-sided optical adhesive tape has a width W1, and 2 mm≤W1≤20 mm. In this way, it facilitates batch processing and production, prevents the generation of bubbles during the bonding process, provides good sealing performance, and ensures the optical effect.

Referring to FIG. 1 and FIG. 2, in an embodiment, the double-sided optical adhesive tape has a thickness d1, and 0.5 mm≤d1≤5 mm. In this way, it prevents adhesive overflow, provides good sealing performance, and ensures the optical effect.

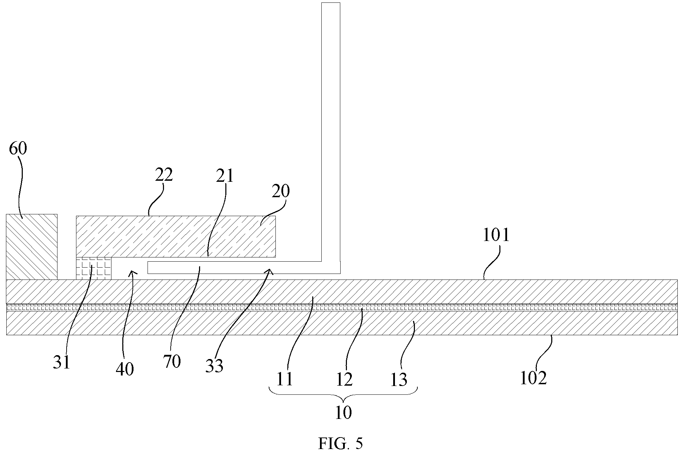

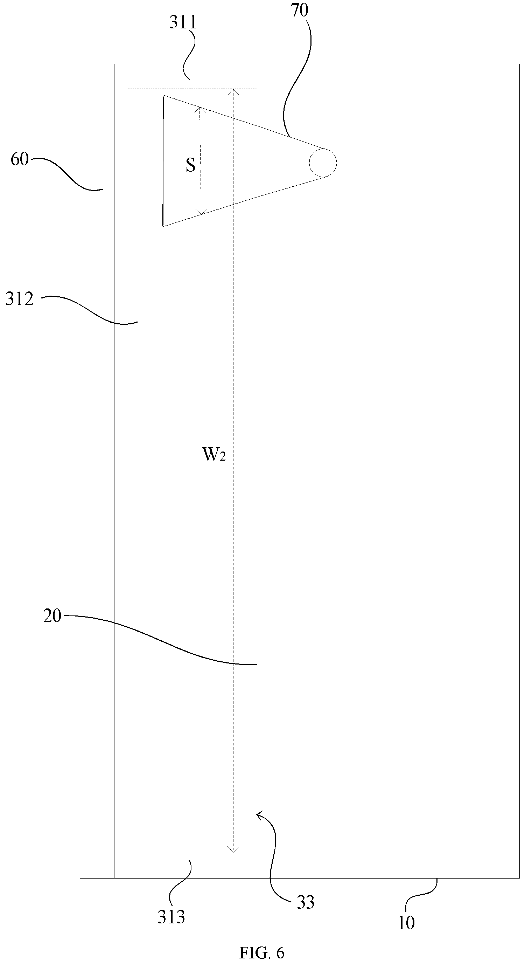

It should be noted that the non-closed annular structure specifically means that, taking a point on the first bonding member 31 as a starting point, this point moves along the extending direction of the first bonding member 31 from the starting point but cannot return to the starting point. In other words, the non-closed annular structure includes a head end and a tail end, with the head end and the tail end spaced apart from each other to form an injection port 33. Referring to FIG. 5 and FIG. 6, the curable liquid is injected into the spatial region 40 defined and enclosed by the first bonding member 31, the first surface 21, and the first main surface 101 through the injection port 33, and is cured to obtain the second bonding member 32, during the assembling step.

Referring to FIG. 5 and FIG. 6, in some embodiments, the non-closed annular structure includes, but is not limited to, a rectangle, a triangle, a pentagon, a hexagon, a circle, an ellipse, or other regular shapes and other irregular shapes provided with an injection port 33, and can be specifically configured in a manner adapted to the shape of the light-guiding medium 20. In the present embodiment, the light-guiding medium 20 is specifically configured as a rectangle and correspondingly the non-closed annular structure is configured as a rectangle provided with the injection port 33 as an example for illustration.

Referring to FIG. 5 and FIG. 6, in an embodiment, the non-closed annular structure includes a first blocking portion 311, a second blocking portion 312, and a third blocking portion 313 connected in sequence. The first blocking portion 311 and the third blocking portion 313 are spaced apart fro each other to form an injection port 33. In this way, during the assembling operation of the glass assembly, the spatial region 40 formed by the cooperation of the first blocking portion 311, the second blocking portion 312, the third blocking portion 313, the light-guiding medium 20, and the glass body 10 is specifically, for example, a groove sealed on three sides. During adhesive pouring, an adhesive nozzle 70 extends into the injection port 33 to inject the liquid into the groove, and the adhesive nozzle 70 moves along the injection port 33 as the adhesive is injected. The adhesive flow path is short, and the liquid can be quickly and uniformly filled into the groove. In addition, the thickness of the liquid depends on the respective thicknesses of the first blocking portion 311, the second blocking portion 312, and the third blocking portion 313, and can be accurately controlled and adjusted.

Referring to FIG. 5 and FIG. 6, in some embodiments, the thicknesses of the first blocking portion 311, the second blocking portion 312, and the third blocking portion 313 are all the same, thereby improving the sealing performance of the three side portions of the groove. Certainly, in some embodiments, the shapes and thicknesses of the first blocking portion 311, the second blocking portion 312, and the third blocking portion 313 may also be different, and can be specifically flexibly adjusted and arranged according to the shapes of the glass body 10 and the light-guiding medium 20, as long as the first blocking portion 311, the second blocking portion 312, and the third blocking portion 313 can achieve tight connection with the first surface 21 and the first main surface 101 respectively to ensure the sealing performance.

Generally speaking, the automotive industry has relatively strict requirements on the weather resistance of materials, and acrylic-based optical adhesives usually cannot meet the requirements.

Referring to FIG. 3 and FIG. 4, in an embodiment, the glass assembly further includes a protective member 50, and the protective member 50 is disposed circumferentially around the bonding assembly 30 and avoids a position opposite to the light-emitting light source 60. That is to say, the protective member 50 is connected to the bonding assembly 30, and the protective member 50 is disposed at the periphery of the light-guiding medium 20, so as to play a sealing and protective role for the bonding assembly 30 and prevent an aging halo defect that occurs when the bonding assembly 30, which is not resistant to weather changes, comes into contact with air. In addition, no protective member 50 is disposed at the position opposite to the light-emitting light source 60, so as to prevent the protective member 50 from blocking light and affecting the light-emitting effect.

Specifically, the protective member 50 includes, but is not limited to, a protective adhesive, a protective film, or other protective materials. In the present embodiment, a protective adhesive is specifically selected, for example. By coating the protective adhesive on the periphery of the bonding assembly 30, the bonding assembly 30 is isolated from air, which provides a sealing and protective role for the bonding assembly 30 and can improve the assembling efficiency.

Referring to FIG. 3 and FIG. 4, in an embodiment, the protective member 50 is further connected to the light-guiding medium 20, and is disposed circumferentially around the light-guiding medium 20 and avoids a position opposite to the light-emitting light source 60.

The protective member 50 covers only an outer edge contour of the second bonding member 32 in a circumferential direction thereof. Alternatively, the protective member 50 covers an outer contour of the second bonding member 32 in a circumferential direction thereof and at least partially covers a contour of the first bonding member 31 in a circumferential direction thereof. That is to say, the protective member 50 can cover an overall outer edge contour of the combination of the first bonding member 31 and the second bonding member 32 in a circumferential direction of the entirety, which plays a sealing and protective role for both the first bonding member 31 and the second bonding member 32, thereby effectively preventing the aging halo defect that occurs when the first bonding member 31 and the second bonding member 32 comes into contact with air. Alternatively, the protective member 50 can cover only a surface of the second bonding member 32, that is, it is disposed at the location of the injection port 33, thereby sealing and protecting a side edge of the second bonding member 32 exposed through the injection port 33, so as to effectively prevent the aging halo defect from occurring in the second bonding member 32 which is more prone to such defect due to air contact. The protective member 50 can also cover the surface of the second bonding member 32 and part of the outer surface region of the first bonding member 31.

In some embodiments, the second bonding member has a refractive index in a range from 1.45 to 1.65, preferably from 1.55 to 1.6. The second bonding member has a visible light transmittance (TL) ≥ 90%, preferably in a range from 99.5% to 99.9%. The second bonding member has a haze ≤ 5%, preferably ≤ 1%.

In an embodiment, the second bonding member can be, but is nto limited to, an optically clear adhesive (OCA), a liquid optical clear adhesive (LOCA), an optical clear resin (OCR), etc.

In some embodiments, the light-guiding medium 20 and the inner glass sheet 11 are made of the same glass material. The glass material includes, but is not limited to, inorganic glass or organic glass. Specifically, the light-guiding medium 20 is made of ultra-clear glass.

In an embodiment, the glass assembly further includes a light-emitting pattern layer (not shown in the figures). The light-emitting pattern layer is disposed on a surface and/or inside of the glass body 10, including but not limited to being disposed on any side surface of the inner glass sheet 11 or on any side surface of the outer glass sheet 13. This can be flexibly adjusted and arranged according to actual requirements. Light from the light-emitting light source 60 enters the light-guiding medium 20, the light-guiding medium 20 is configured to introduce the light from the light-emitting light source 60 into the glass body 10. The light-emitting pattern layer reflects the light of the light-emitting light source 60, so that a light-emitting pattern can be observed in the internal environment.

Referring to FIG. 1 and FIG. 2, in an embodiment, a vehicle includes, but is not limited to, an automobile, a bus, a car, a public bus, a coach, a truck, a jeep, a train, a high-speed rail, etc., and the vehicle includes the glass assembly according to any one of the above embodiments.

In the above vehicle, during the assembling process of the glass assembly, the first bonding member 31 is first connected to the periphery of the first surface 21 and the first main surface 101, respectively. Since the first bonding member 31 is an optical solid adhesive, an optical adhesive tape, an optical adhesive rod, or an optical adhesive strip, it plays a supporting role for the light-guiding medium 20, enabling the light-guiding medium 20 to be preliminarily fixed onto the glass body 10 and forming a spacing between the light-guiding medium 20 and the glass body 10. The liquid is then injected into the spatial region 40 defined and enclosed by the first bonding member 31, the first surface 21, and the first main surface 101, and is cured to obtain the second bonding member 32. In this way, the thickness of the second bonding member 32 depends on the thickness of the first bonding member 31. Since the thickness of the first bonding member 31 can be relatively well controlled, the thickness of the second bonding member 32 can be easily controlled, thereby improving the accuracy and uniformity of the adhesive thickness. In addition, adhesive overflow can be greatly reduced, thus reducing cleaning operations, and thereby improving product quality and assembling efficiency.

Referring to FIG. 1, FIG. 2, FIG. 5, and FIG. 6, in an embodiment, a method for manufacturing a glass assembly includes:
Step S100: first connecting a first bonding member 31 to a first main surface 101 of a glass body 10 and a first surface 21 of a light-guiding medium 20, respectively, so that the first bonding member 31 is disposed around a periphery of the first surface 21 and forms a non-closed annular structure, wherein the first bonding member 31 includes an optical solid adhesive, an optical adhesive tape, an optical adhesive rod, an optical adhesive strip, or any combinations thereof.
Step S200: injecting a curable liquid into and filling up a spatial region 40 defined and enclosed by the first bonding member 31, the first surface 21, and the first main surface 101, and curing the liquid to obtain a second bonding member 32. In this way, the thickness of the second bonding member 32 depends on the thickness of the first bonding member 31. Since the thickness of the first bonding member 31 can be relatively well controlled, the thickness of the second bonding member 32 can be easily controlled, thereby improving the accuracy and uniformity of the adhesive thickness. In addition, adhesive overflow can be greatly reduced, thereby reducing cleaning operations, and further improving product quality and assembling efficiency.

Since the liquid is injected into and fills up the spatial region 40 defined and enclosed by the first bonding member 31, the first surface 21, and the first main surface 101, gaps can be avoided, thereby improving the optical effect.

In addition, the liquid specifically adopts an optical adhesive whose refractive index is the same as or substantially the same as that of the inner glass sheet 11. After the liquid is cured and formed, the light-guiding medium 20 and the inner glass sheet 11 can be connected as one piece without an interface at the connection portion, which can prevent refraction, or minimize refraction as much as possible, thereby further improving the optical effect.

Referring to FIG. 3, FIG. 5, and FIG. 6, in some embodiments, the manufacturing method further includes: Step S300: after the step of curing the liquid to obtain the second bonding member 32, providing a protective member 50 on an exposed wall surface of the second bonding member 32, or on both an exposed wall surface of the first bonding member 31 and an exposed wall surface of the second bonding member 32.

The protective member 50 includes, but is not limited to, a protective adhesive, a protective film, or other protective materials, as long as it is disposed on the exposed wall surface of the bonding member to isolate the exposed wall surface of the bonding member from air, thereby playing a sealing and protective role.

In some embodiments, in Step S200, an adhesive nozzle 70 extends into the spatial region 40 through an injection port 33 of the non-closed annular structure, and the adhesive nozzle 70 is moved from an side of the injection port 33 to the other side of the injection port 33 along a width direction W2 of the injection port 33 during the adhesive injection process. In this way, the liquid gradually fills up various parts of the spatial region 40 along the width direction W2 thereof, which facilitates the rapid and uniform filling of the spatial region 40 with the liquid..

Specifically, a moving speed of the adhesive nozzle 70 is set, for example, to a constant speed, including but not limited to various values such as 0.05 m/s, 0.08 m/s, 0.1 mm/s, 0.2 mm/s, etc., as long as the adhesive liquid can uniformly fill up the spatial region 40.

Referring to FIG. 3, FIG. 5, and FIG. 6, in some embodiments, the adhesive nozzle 70 is configured to be in a flat shape, which facilitates insertion into the spatial region 40 through the injection port 33. In addition, a spacing S between two opposite side walls of a discharge passage of the adhesive nozzle 70 gradually increases along a discharge direction. In this way, the adhesive nozzle 70 is configured to be in a flat horn shape, which can increase an adhesive injection speed.

In the present application, unless otherwise explicitly specified and defined, if there are terms such as "install", "connect", "link", "fix", etc., these terms should be understood in a broad sense. For example, it may be a fixed connection, or a detachable connection, or being integrated; it may be a mechanical connection, or an electrical connection; it may be a direct connection, or an indirect connection via an intermediate medium, and it may be communication between interiors of two elements or an interaction relationship between two elements, unless otherwise explicitly defined. For those of ordinary skill in the art, the specific meanings of the above terms in the present application can be understood according to specific circumstances.

In the present application, unless otherwise explicitly specified and defined, if there are descriptions such as a first feature being "on" or "under" a second feature, the meaning may be that the first and second features are in direct contact, or the first and second features are in indirect contact via an intermediate medium. Moreover, the first feature being "on", "above" and "over" the second feature may mean that the first feature is directly above or obliquely above the second feature, or merely indicates that a horizontal height of the first feature is higher than that of the second feature. The first feature being "under", "below" and "beneath" the second feature may mean that the first feature is directly below or obliquely below the second feature, or merely indicates that a horizontal height of the first feature is lower than that of the second feature.

The technical features of the above-described embodiments may be combined in any manner. To make the description concise, not all possible combinations of the various technical features in the above embodiments are described. However, all such combinations should be considered to fall within the scope recited in this description as long as there is no contradiction in the combination of these technical features.

The above-described embodiments merely express several implementations of the present application, and the description thereof is relatively specific and detailed, but cannot therefore be construed as limiting the scope of the patent application. It should be pointed out that several deformations and improvements can be made without departing from the concept of the present application for those of ordinary skill in the art, and these all fall within the protection scope of the present application. Therefore, the protection scope of the patent of the present application shall be subject to the appended claims.

## Claims

1. A glass assembly, comprising:
a glass body provided with a first main surface facing an internal environment;
a light-guiding medium and a bonding assembly, wherein the light-guiding medium is provided with a first surface, the first surface is connected and fixed to the first main surface via the bonding assembly, the bonding assembly comprises a first bonding member and a second bonding member, the first bonding member is disposed around a periphery of the first surface and forms a non-closed annular structure, and the second bonding member is filled in a spatial region defined and enclosed by the first bonding member, the first surface, and the first main surface and is obtained by curing a curable liquid.

2. The glass assembly according to claim 1 further comprising a light-emitting light source, the light-emitting light source is disposed on the first main surface and located at an end of the light-guiding medium, light from the light-emitting light source enters the light-guiding medium, and the light-guiding medium is configured to introduce the light from the light-emitting light source into the glass body.

3. The glass assembly according to claim 1 or 2, wherein the first bonding member is configured as a transparent double-sided optical adhesive tape.

4. The glass assembly according to claim 3, wherein the double-sided optical adhesive tape has a width W1, and 2 mm≤W1≤20 mm.

5. The glass assembly according to claim 3 or 4, wherein the double-sided optical adhesive tape has a thickness d1, and 0.5 mm≤d1≤5 mm.

6. The glass assembly according to any one of claims 1 to 5, wherein the second bonding member has a refractive index of 1.45 to 1.65.

7. The glass assembly according to any one of claims 1 to 6, wherein the second bonding member has a visible light transmittance≥90%.

8. The glass assembly according to any one of claims 1 to 7, wherein the second bonding member has a haze≤5%.

9. The glass assembly according to any one of claims 1 to 8, wherein the non-closed annular structure comprises a first blocking portion, a second blocking portion, and a third blocking portion connected in sequence, and the first blocking portion and the third blocking portion are spaced apart from each other to form an injection port.

10. The glass assembly according to claim 2 further comprising a protective member, wherein the protective member is disposed circumferentially around the bonding assembly and avoids a position opposite to the light-emitting light source.

11. The glass assembly according to claim 10, wherein the protective member covers only an outer edge contour of the second bonding member in a circumferential direction thereof; or
the protective member covers an outer contour of the second bonding member in a circumferential direction thereof and at least partially covers a contour of the first bonding member in a circumferential direction thereof.

12. The glass assembly according to claim 10 or 11, wherein the protective member is further connected to the light-guiding medium, and is disposed circumferentially around the light-guiding medium and avoids a position opposite to the light-emitting light source.

13. The glass assembly according to any one of claims 1 to 12, wherein the glass body is configured as a single glass sheet; or
the glass body comprises an inner glass sheet, an intermediate layer, and an outer glass sheet connected in sequence.

14. The glass assembly according to any one of claims 1 to 13, further comprising a light-emitting pattern layer, wherein the light-emitting pattern layer is disposed on a surface and/or inside of the glass body.

15. The glass assembly according to any one of claims 1 to 14, wherein the second bonding member is an optically clear adhesive, a liquid optical clear adhesive, or an optical clear resin.

16. A vehicle, comprising the glass assembly according to any one of claims 1 to 15.

17. A method for manufacturing a glass assembly, comprising:
step S100: first connecting a first bonding member respectively to a first main surface of a glass body and a first surface of a light-guiding medium, so that the first bonding member is disposed around a periphery of the first surface and forms a non-closed annular structure; and
step S200: injecting a curable liquid into and filling up a spatial region defined and enclosed by the first bonding member, the first surface, and the first main surface, and curing the liquid to obtain a second bonding member.

18. The method according to claim 17, further comprising: step S300: after the step of curing the liquid to obtain the second bonding member, providing a protective member on an exposed wall surface of the second bonding member or providing a protective member on both an exposed wall surface of the first bonding member and an exposed wall surface of the second bonding member.

19. The method according to claim 17 or 18, wherein in step S200, an adhesive nozzle is configured to extend into the spatial region through an injection port of the non-closed annular structure, and the adhesive nozzle is moved from a side of the injection port to another side of the injection port in a width direction of the injection port during the adhesive injection process.

20. The method according to claim 19, wherein the adhesive nozzle is configured to be in a flat shape; and/or
a spacing S between two opposite side walls of a discharge passage of the adhesive nozzle gradually increases in a discharge direction.
